Europäisches Patentamt

European Patent Office

Office européen des brevets

(11) Numéro de publication: **0 272 979 B1**

# FASCICULE DE BREVET EUROPEEN

(45) Date de publication de fascicule du brevet: **24.03.93** (51) Int. Cl.5: **B01J 23/10**, C01B 17/04, //B01D53/36

(21) Numéro de dépôt: **87402877.2**

(22) Date de dépôt: **16.12.87**

(54) **Procédé pour le traitement de gaz industriels contenant des composés du soufre.**

(30) Priorité: **23.12.86 FR 8618056**

(43) Date de publication de la demande:
**29.06.88 Bulletin 88/26**

(45) Mention de la délivrance du brevet:
**24.03.93 Bulletin 93/12**

(84) Etats contractants désignés:
**AT BE CH DE ES FR GB GR IT LI LU NL SE**

(56) Documents cités:
EP-A- 0 141 998    EP-A- 0 153 228
EP-A- 0 207 857    EP-A- 0 244 301
FR-A- 2 242 144    FR-A- 2 540 092
US-A- 3 978 200    US-A- 4 346 063

(73) Titulaire: **RHONE-POULENC CHIMIE**
**25, quai Paul Doumer**
**F-92408 Courbevoie Cédex(FR)**

(72) Inventeur: **Brunelle, Jean-Pierre Résidence**
**Fontaine**
**Saint-Martin Rue de la Planchette**
**F-95350 Saint Brice sous Forêt(FR)**
Inventeur: **Nortier, Patrice**
**2, allée des Fauvettes**
**F-92390 Romainville(FR)**
Inventeur: **Ouemère, Eric**
**11bis rue de Martray**
**F-95240 Cormeilles-en-Parisis(FR)**

(74) Mandataire: **Esson, Jean-Pierre et al**
**Rhône-Poulenc Interservices Service Bre-**
**vets Chimie 25, quai Paul Doumer**
**F-92408 Courbevoie Cedex (FR)**

EP 0 272 979 B1

## Description

La présente invention concerne un procédé pour le traitement de gaz industriels contenant des composés du soufre.

On entend ici et dans toute la suite de la description par "traitement des composés du soufre" toute transformation catalytique de composés du soufre provenant de gaz industriels en composés facilement éliminables.

L'invention a trait plus particulièrement à un procédé d'élimination des dérivés organiques sulfurés contenus dans un gaz industriel qui contient en outre de l'hydrogène sulfuré de l'hydrogène sulfuré, de l'anhydride sulfureux, de l'oxygène et/ des dérivés organiques du soufre tels que $CS_2$ et COS, en particulier dans le cadre de la catalyse Claus.

Dans le procédé Claus classique par exemple, la récupération du soufre à partir de gaz renfermant de l'hydrogène sulfuré et éventuellement des dérivés organiques du soufre comporte deux étapes.

Dans une première étape, on brûle l'hydrogène sulfuré en présence d'une quantité d'air réglée pour transformer une partie du gaz en anhydride sulfureux puis, dans une deuxième étape, on fait passer le mélange gazeux obtenu dans des réacteurs en série renfermant un catalyseur sur lequel a lieu la réaction:

$$2 \ H_2S \ + \ SO_2 \rightarrow \frac{3}{n} \ S_n \ + \ 2 \ H_2O \qquad (1)$$

Par ailleurs, outre l'hydrogène sulfuré, les gaz Claus peuvent contenir des composés carbonés du soufre tels que COS et $CS_2$ qui sont généralement relativement stables au niveau des convertisseurs catalytiques et qui contribuent à accroître de 20 à 50 % les émissions de $SO_2$ et de composés sulfurés dans l'atmosphère après incinération des fumées. Ces composés très gênants sont, soit déjà contenus dans le gaz à traiter, soit formés au cours de la première étape à haute température.

Ces composés peuvent être éliminés par plusieurs types de réaction en particulier par hydrolyse selon les réactions (2), (3) et\ou (4) :

$$CS_2 \ + \ 2 \ H_2O \rightarrow CO_2 \ + \ 2H_2S \qquad (2)$$
$$CS_2 \ + \ H_2O \rightarrow COS \ + \ H_2S \qquad (3)$$
$$COS \ + H_2O \rightarrow CO_2 \ + \ H_2S \qquad (4)$$

On connait divers catalyseurs et procédés de traitement de transformation catalytique de composés organiques sulfurés présents dans les gaz industriels.

C'est ainsi que l'on sait déjà depuis très longtemps que l'alumine est un catalyseur pour ce type de réactions. Toutefois l'alumine présente des performances moyennes en ce qui concerne l'élimination des dérivés organiques du soufre qui ont été mentionnés plus haut.

D'autre part plus récemment, on a utilisé comme catalyseur l'oxyde de titane qui présente une activité catalytique nettement supérieure à celle de l'alumine pour l'élimination des dérivés organiques du soufre. Cependant, cet oxyde présente une activité initiale moyenne à faible temps de contact.

L'objet de l'invention est donc un procédé d'élimination des dérivés organiques sulfurés contenus dans un gaz industriel qui contient en outre de l'hydrogène sulfuré ($H_2S$), de l'anhydride sulfureux ($SO_2$) et de l'oxygène, du type comprenant la mise en contact dudit gaz avec de l'eau et un catalyseur pour transformer par réaction d'hydrolyse lesdits dérivés organiques sulfurés en composés facilement éliminables, caractérisé en ce que l'on utilise un catalyseur comportant de l'oxyde de cérium, ledit catalyseur ne comprenant pas d'oxyde de zirconium.

Les catalyseurs selon l'invention pour le traitement des gaz industriels contenant des composés du soufre peuvent se présenter selon plusieurs modes de réalisation.

Selon un premier mode de réalisation, le catalyseur est caractérisé en ce qu'il consiste en un produit massique comportant de l'oxyde de cérium.

Selon une variante de ce premier mode, le catalyseur est caractérisé en ce qu'il comporte en outre au moins un oxyde choisi dans le groupe comprenant l'oxyde de titane, l'oxyde d'aluminium, les oxydes de terres rares.

Selon un second mode de réalisation, le catalyseur est caractérisé en ce qu'il comprend un support comportant de l'oxyde de cérium et une phase supportée active.

Selon ce second mode cette phase supportée active peut comporter au moins un oxyde choisi dans le groupe comprenant l'oxyde de titane, l'oxyde d'aluminium, les oxydes de terres rares.

Selon un troisième mode de réalisation le catalyseur est caractérisé en ce qu'il comprend un support et une phase supportée comportant de l'oxyde de cérium. Ce support peut être choisi dans le groupe comprenant l'oxyde d'aluminium, l'oxyde de titane, les oxydes de terres rares.

D'autres caractéristiques et avantages de l'invention seront mieux compris à la lecture de la description et des exemples concrets mais non limitatifs qui vont suivre.

Comme indiqué plus haut, la caractéristique principale des catalyseurs de l'invention réside dans le fait qu'ils comprennent de l'oxyde de cérium.

Cet oxyde peut être préparé selon tout moyen connu.

Il peut être préparé notamment par chauffage à l'air entre 400° C et 1000° C de l'hydroxyde cérique ou de certains sels oxygénés tels que nitrates, sulfates, carbonates, oxalates, acétates, (cf. Paul PASCAL - Nouveau Traité de Chimie Minérale. TOME VII p. 777 - 1959 -).

On connaît par exemple, selon l'article de S. HORSLEY, J.M. TOWNER, M.B. WALDRON (Tirages Prelim. Symp. Eur. Metall. Poudres, 4 th. 1, paper 12, (1975) und prcédé de préparation d'oxyde de cérium IV par décomposition thermique de l'oxalate de cérium III.

On peut également citer l'article de R. Sh. MIKHAIL, R.M. GABR et R.B. FAHIN (J. Appl. Chem. 20, 7, 222-225 (1970) qui s'intéressant à la structure de l'oxyde cérique ont étudié les caractéristiques de l'oxyde cérique préparé par calcination de l'hydroxyde cérique obtenu par traitement d'une solution de nitrate céreux par l'ammoniaque en présence d'eau oxygénée.

Par ailleurs, cet oxyde peut se trouver présent dans les catalyseurs de l'invention soit seul, soit en mélange avec d'autres éléments et en particulier des éléments catalytiquement actifs. C'est ainsi que la quantité d'oxyde de cérium peut varier entre 0,5 % et 100 % en poids par rapport au catalyseur fini.

Parmi les éléments catalytiquement actifs, on citera particulièrement l'oxyde de titane. Les formulations à base notamment d'oxyde de titane et d'oxyde de cérium présentent en particulier une activité initiale élévée à faible temps de contact.

Dans le cas de ces formulations, les quantités respectives d'oxydes de titane et de cérium peuvent varier dans de grandes proportions. A titre d'exemple uniquement on peut mentionner des formulations industrielles comprenant entre 5 et 80 % et plus particulièrement 5 à 30 % en poids d'oxyde de cérium.

Comme autre élément catalytiquement actif, on peut aussi utiliser l'oxyde d'aluminium. Les quantités d'oxyde d'aluminium et d'oxyde de cérium pourront aussi varier dans de larges proportions notamment dans celles qui viennent d'être indiquées ci-dessus dans le cas de l'oxyde de titane.

On peut enfin mentionner comme autre élément catalytiquement actif les oxydes de terres rares tels que par exemple les oxydes de lanthane, néodyme, praséodyme.

Il est bien sûr possible sans sortir du cadre de l'invention d'utiliser une combinaison de plusieurs des oxydes mentionnés ci-dessus.

Par ailleurs, dans le cadre de l'invention, l'oxyde de cérium peut être utilisé avec un ou des additifs permettant une stabilisation de sa surface spécifique à haute température.

Ces additifs sont des oxydes de éléments choisis dans le groupe constitué par le silicium, le thorium et les terres rares.

Les additifs indiqués plus haut pour la stabilisation de la surface spécifique sont employés dans des quantités qui varient généralement entre environ 1 et 10 % en poids d'oxyde par rapport à la quantité totale oxyde de cérium - additif, de préférence entre 2 et 5 %.

Lors de la préparation du catalyseur ces additifs sont généralement introduits sous forme de précurseurs.

Par ailleurs, en fonction de la forme sous laquelle on désire présenter le catalyseur, il est possible de faire rentrer dans sa formulation des additifs de mise en forme. Ces additifs sont ceux utilisés classiquement dans le techniques de mise en forme. Ces additifs confèrent à la pâte obtenue par malaxage les propriétés rhéologiques adaptées à la mise en forme. A titre d'exemple de ces additifs, on peut citer notamment : la cellulose, la carboxyméthyl-cellulose, la carboxyéthyl-cellulose, le tail-oil, des agents tensio-actifs, des agents floculants comme les polyacrilamides, le noir de carbone, les amidons, l'acide stéarique, l'alcool polyacrylique, l'alcool polyvinylique, le glucose, les polyéthylène glycol...

Enfin, la quantité utilisée de ces additifs lors de la préparation peut varier entre 0,1 et 15 % en poids par rapport au catalyseur fini.

De plus il est possible de mettre en oeuvre des constituants complémentaires susceptibles d'améliorer les qualités mécaniques des formulations. Ces constituants pourront être choisis dans le groupe comprenant les argiles, les silicates, les sulfates d'alcalino-terreux et les fibres céramiques. Ces constituants peuvent être utilisés dans des quantités en poids par rapport au catalyseur fini pouvant aller jusqu'à 99,5 %, plus particulièrement jusqu'à 60 % et plus précisément jusqu'à 30 %.

Les catalyseurs selon l'invention peuvent être préparés selon tout procédé connu approprié pour obtenir soit un produit massique soit un produit sur support.

Les produits massiques pourront ainsi être obtenus par mise en forme d'un mélange contenant les constituants du catalyseur tels que définis ci-dessus.

On effectue un malaxage d'un mélange à base d'eau, de poudre contenant de l'oxyde ou de l'oxyde hydraté de cérium et d'autres additifs du type mentionné ci-dessus le cas échéant, avec éventuellement des agents de mise en forme et les oxydes ou les oxydes hydratés des autres éléments catalytiquement actifs mentionnés plus haut.

On entend ici et pour toute la description par oxydes hydratés les composés de formule $MO_x (OH)_y$, z $H_2O$ M étant Ce, Ti, Al ou une terre rare.

Le mélange ainsi obtenu est ensuite mis en forme. La mise en forme peut conduire à des produits de forme variée par exemple sphérique, cylindrique, à des extrudés de forme pleines ou creuses en particulier à profil cylindrique, trilobé, quadrilobé, ou multilobé ; à des produits sous forme de pastilles, de billes, de boulettes, de granulés, de monolithes et plus particulièrement sous forme de nid d'abeille etc...de dimensions variées. Ils peuvent notamment être obtenus avec une machine à pastiller, en granulateur tournant, une machine de moulage par extrusion, une machine à former des boulettes ou une combinaison d'une machine de moulage par extrusion avec un granulateur tournant.

Comme forme particulière avantageuse on peut citer les produits extrudés pleins ou creux à profil multilobé.

Dans une dernière étape, les produits ainsi obtenus sont séchés éventuellement puis calcinés.

On pourra ainsi préparer selon ce procédé notamment les produits massiques à base d'oxyde de cérium seul, à base d'oxyde de cérium et des additifs stabilisant de la surface spécifique ainsi que les produits composés à base d'oxydes de cérium, de zirconium, de titane, d'aluminium et de terres rares et avec éventuellement les additifs ci-dessus.

Un autre mode de préparation pourra être utilisé pour l'obtention de catalyseurs supportés notamment pour les catalyseurs comprenant un support avec l'oxyde de cérium comme phase supportée ou bien inversement avec un support à base d'oxyde de cérium et une phase supportée comportant par exemple au moins un oxyde choisi dans le groupe comprenant l'oxyde de titane, l'oxyde d'aluminium, et les oxydes de terres rares.

Le support peut être préparé et façonné comme décrit ci-dessus à partir d'un mélange de poudre d'oxyde ou d'oxyde hydraté, des éléments mentionnés plus haut et éventuellement d'additifs de mise en forme et de constituants complémentaires améliorant les qualités mécaniques qui ont été décrits ci-dessus.

Le support ainsi obtenu peut être ensuite imprégné ou enduit de manière à effectuer le dépôt de la phase supportée. L'imprégnation ou l'enduction se fait de manière connue par mise en contact du support avec une solution, un sol, un gel, comprenant des oxydes ou des précurseurs des oxydes constituant la phase active supportée.

Ainsi, on pourra imprégner ou enduire un support à base d'au moins un oxyde choisi dans le groupe comprenant l'oxyde de titane, l'oxyde d'aluminium et au moins un oxyde de terres rares par un précurseur de l'oxyde de cérium.

Selon une autre variante, on pourra partir d'un support du type qui vient juste d'être mentionné que l'on enrobe par l'oxyde de cérium ou un précurseur de celui-ci, cet enrobage étant éventuellement précédé ou suivi d'une imprégnation par un composé du cérium et/ou un composé à base d'alumine de titane, de zirconium ou d'au moins un oxyde de terres rares.

En outre, il est aussi possible de préparer les catalyseurs de l'invention par coprécipitation ou cogélification des éléments constitutifs.

Enfin, il est bien entendu possible dans le cadre de l'invention de mettre en oeuvre les formulations catalytiques décrites ci-dessus sur des monolithes métalliques ou en matière céramique ; ils pourront être particulièrement constitués par un ou plusieurs oxydes réfractaires, de préférence employé sous forme d'une pellicule ou d'un revêtement appliqué sur un monolithe du type précité, ledit monolithe étant de préférence sous forme d'une structure inerte et rigide en nids d'abeille comprenant des canaux ou conduits. De tels supports sont bien connus de l'homme de l'art et ont été largement décrits dans la littérature.

Les oxydes réfractaires utilisés sont notamment choisis parmi le groupe comprenant : les oxydes de magnésium, calcium, strontium, baryum, scandium, lanthanides, indium, thallium, silicium, titane, hafnium, thorium, germanium, plomb, vanadium, niobium, tantale, chrome, molybdène, tungstène et rhénium.

Les monolithes métalliques utilisés sont notamment ceux obtenus à partir d'alliages de chrome, aluminium et cobalt tels que ceux connus sous la marque KANTHAL ou ceux obtenus à partir d'alliages de fer, de chrome, d'aluminium et d'yttrium et connus sous la marque FECRALLOY. Le métal peut aussi être

4

de l'acier carboné ou de la fonte simple.

Les monolithes en matière céramique utilisés sont notamment ceux comportant comme matière principale : la cordiérite, l'alumine, la mullite, le zirconium, la zirconmullite, le titanate de baryum, la porcelaine, l'oxyde de thorium, l'oxyde de magnésium, la stéatite, les carbures de bore ou de silicium.

La structure cellulaire en nids d'abeilles peut être de forme hexagonale, tétragonale, triangulaire ou ondulée, elle doit permettre le passage de gaz dans les canaux ou conduits formés lors de leur fabrication par extrusion, laminage, solidification d'éléments en forme de feuille, etc...

EXEMPLE 1 COMPARATIF - Catalyseur 1

Cet exemple concerne la préparation d'un catalyseur selon l'art antérieur. Le catalyseur est obtenu par déshydratation rapide à 800 °C d'hydrate BAYER. Le produit flashé est broyé puis aggloméré au drageoir. Les billes obtenues sont mûries à 100°C pendant 12 heures puis calcinées à 500°C pendant 4 heures. Le catalyseur obtenue présente les caractéristiques suivantes :

| - billes de diamètre | 4 mm |
|---|---|
| - SBE (surface spécifique) | 250 m2.g$^{-1}$ |
| - VPT (volume poreux total) | 0,48 cm3.g$^{-1}$. |

EXEMPLE 2 COMPARATIF - Catalyseur 2

Cet exemple concerne un catalyseur selon l'art antérieur a une suspension d'oxyde de titane obtenue après hydrolyse et filtration dans le procédé classique d'attaque sulfurique de l'ilménite, on ajoute une suspension de chaux afin de neutraliser la totalité des sulfates. La suspension est séchée à 150°C pendant 1 heure. La poudre obtenue est malaxée pendant 2 heures en présence d'eau et d'acide nitrique dans les proportions suivantes :

| - oxyde de titane | 58 % |
|---|---|
| - HNO$_3$ | 2% |
| - H$_2$O | 40 % |

Le mélange est ensuite extrudé au travers d'une filière de diamètre 3,2 mm. Les extrudés sont séchés à 120°C pendant 3 heures puis calcinés à 450°C pendant 2 heures.

Les caractéristiques du catalyseur obtenu sont les suivantes :

| - extrudés de diamètre | 3 mm |
|---|---|
| - SBE | 120 m2.g$^{-1}$ |
| - VPT | 0,35 cm3.g$^{-1}$ |

EXEMPLE 3 COMPARATIF - Catalyseur 3

Cet exemple concerne un catalyseur selon l'invention. Une masse de 700 g de billes d'alumine obtenue selon le procédé décrit dans l'exemple 1 est imprégnée par 340 cm3 d'une solution de nitrate cérique à 225 g de cérium par litre. Le produit est séché à 120°C pendant 6 heures puis calciné à 550°C pendant 2 heures.

Les caractéristiques du catalyseur obtenu sont les suivantes :

| - billes de diamètre | 4 mm |
|---|---|
| - SBE | 195 m2.g$^{-1}$ |
| - VPT | 0,42 cc.g$^{-1}$ |

EP 0 272 979 B1

EXEMPLE 4 COMPARATIF - Catalyseur 4

Cet exemple concerne un catalyseur selon l'invention a une suspension d'oxyde de titane obtenue après hydrolyse et filtration dans le procédé classique d'attaque sulfurique de l'ilménite, on ajoute une suspension de chaux afin de neutraliser la totalité des sulfates. La suspension est séchée à 150°C pendant 1 heure. La poudre obtenue est malaxée avec une poudre d'hydroxyde de cérium obtenue par précipitation de l'ammoniaque de nitrate cérique, pendant 2 heures en présence d'eau et d'acide nitrique, et dans les proportions suivantes :

| - Oxyde de titane | 40 % |
| - Hydroxyde de cérium | 17 % |
| - $HNO_3$ | 3 % |
| - $H_2O$ | 40 % |

Le mélange est ensuite extrudé au travers d'une filière de diamètre 3,2 mm. Les extrudés sont séchés à 120°C pendant 15 heures puis calcinés à 450°C pendant 2 heures.
Les caractéristiques du catalyseur obtenue sont les suivantes :

| - extrudés de diamètre | 3 mm |
| - SBE | 102 m2.g$^{-1}$ |
| - VPT | 0,30 cc.g$^{-1}$ |

EXEMPLE 5 COMPARATIF - Catalyseur 5

Cet exemple concerne un catalyseur selon l'invention. Une solution de nitrate céreux à 800 g/l de" cérium est calcinée à 150°C pendant 24 heures. Le gâteau obtenu est malaxé pendant 2 heures en présence d'eau et d'acide nitrique dans les proportions suivantes :

| - Hydroxyde de cérium | 63 % |
| - $HNO_3$ | 3 % |
| - $H_2O$ | 34 % |

Les extrudés sont séchés à 120°C pendant 10 heures puis calcinés à 400°C pendant 3 heures. Le catalyseur obtenu présente les caractéristiques suivantes :

| - extrudés de diamètre | 3 mm |
| - SBE | 70 m2.g$^{-1}$ |
| - VPT | 0,25 cm3.g$^{-1}$ |

EXEMPLE 6 COMPARATIF - Test catalytique

Le test catalytique a pour but de comparer les activités en hydrolyse du $CS_2$ de différents catalyseurs dans les conditions suivantes :
- composition du gaz :

| $H_2S$ | 6 % |
| $SO_2$ | 4 % |
| $CS_2$ | 1 % |
| $H_2O$ | 30 % |
| $N_2$ | 59 % |

6

- VVH = 900 h$^{-1}$
- température entrée réacteur : 225°C
- température sortie réacteur : 340°C.

Les gaz de sortie sont analysés par chromatographie en phase gazeuse.

Dans le tableau 1 ci-dessous figurent les résultats obtenus, sur les catalyseurs décrits dans les exemples, avant et après vieillissement de 15 heures de fonctionnement dont 5 heures sous 5000 VPM d'oxygène en hydrolyse du $CS_2$. Les nombres donnés expriment le taux de conversion en %.

**Tableau 1** - RESULTATS CATALYTIQUES EN HYDROLYSE DU $CS_2$ A DIFFERENTS TEMPS DE CONTACT POUR LES CATALYSEURS N° 1 A 5 (AVANT ET APRES VIEILLISEMENT)

| | Catalyseur | Temps de contact | 0,5 s | 1 s | 2 s |
|---|---|---|---|---|---|
| COMPARATIF | $Al_2O_3$ | Catalyseur 1 | 30 | 55 | 87 |
| | | Catalyseur 1 après vieillissement | 7 | 17 | 62 |
| | $TiO_2$ | Catalyseur 2 | 55 | 70 | 92 |
| | | Catalyseur 2 après vieillissement | 30 | 55 | 67 |
| INVENTION | $Al_2O_3$ - $CeO_2$ | Catalyseur 3 | 58 | 72 | 89 |
| | | Catalyseur 3 après vieillissement | 15 | 30 | 67 |
| | $TiO_2$ - $CeO_2$ | Catalyseur 4 | 63 | 88 | 99 |
| | | Catalyseur 4 après vieillissement | 58 | 83 | 99 |
| | $CeO_2$ | Catalyseur 5 | 96 | 100 | 100 |
| | | Catalyseur 5 après vieillissement | 80 | 95 | 100 |

L'examen des résultats reportés dans le tableau 1 met bien en évidence la supériorité des catalyseurs de l'invention par rapport au catalyseur de l'art antérieur.

On notera notamment l'activité particulièrement élevée pour un faible temps de contact des catalyseurs de l'invention en élimination/hydrolyse du $CS_2$. Des résultats identiques à ceux obtenus pour l'élimination du $CS_2$ se retrouvent d'ailleurs pour l'élimination du COS.

**Revendications**

1. Procédé d'élimination des dérivés organiques sulfurés contenus dans un gaz industriel qui contient en outre de l'hydrogène sulfuré ($H_2S$), de l'anhydride sulfureux ($SO_2$) et de l'oxygène, du type comprenant la mise en contact dudit gaz avec de l'eau et un catalyseur pour transformer par réaction d'hydrolyse lesdits dérivés organiques sulfurés en composés facilement éliminables, caractérisé en ce que l'on utilise un catalyseur comportant de l'oxyde de cérium, ledit catalyseur ne comprenant pas d'oxyde de zirconium.

EP 0 272 979 B1

**2.** Procédé selon la revendication 1, caractérisé en ce que ledit catalyseur consiste en un produit massique.

**3.** Procédé selon la revendication 2, caractérisé en ce que ledit catalyseur comporte en outre au moins un oxyde choisi dans le groupe contenant l'oxyde de titane, l'oxyde d'aluminium, les oxydes de terres rares.

**4.** Procédé selon la revendication 1, caractérisé en ce que ledit catalyseur consiste en un support comportant de l'oxyde de cérium et une phase supportée.

**5.** Procédé selon la revendication 4, caractérisé en ce que ladite phase supportée comporte au moins un oxyde choisi dans le groupe contenant de l'oxyde de titane, l'oxyde d'aluminium, les oxydes de terres rares.

**6.** Procédé selon la revendication 1, caractérisé en ce que ledit catalyseur consiste en un support et une phase supportée comportant de l'oxyde de cérium.

**7.** Procédé selon la revendication 6, caractérisé en ce que ledit catalyseur est un support en monolithe.

**8.** Procédé selon la revendication 7, caractérisé en ce que ledit catalyseur est un support en monolithe ou en matière céramique.

**9.** Procédé selon les revendications 6 ou 7, caractérisé en ce que ledit support est à base d'oxyde choisi parmi le groupe comprenant l'oxyde de titane, l'oxyde d'aluminium, les oxydes de terres rares.

**10.** Procédé selon l'une des revendications précédentes, caractérisé en ce que ledit catalyseur se présente sous une forme pleine ou creuse à profil multilobé.

**11.** Procédé selon l'une des revendications précédentes, caractérisé en ce que la quantité d'oxyde de cérium varie entre 0,5 et 100 % en poids par rapport au catalyseur fini.

**12.** Procédé selon l'une des revendications précédentes, caractérisé en ce que ledit catalyseur comporte un additif constitué par au moins un des oxydes des éléments choisis dans le groupe constitué par le silicium, le thorium et les terres rares.

**13.** Procédé selon la revendication 12, caractérisé en ce que la quantité d'additif varie entre 1 et 20 % en poids par rapport à la quantité totale oxyde de cérium-additif.

**14.** Procédé selon l'une des revendications précédentes, caractérisé en ce que ledit catalyseur comporte un ou plusieurs constituants complémentaires choisis dans le groupe comprenant les argiles, les silicates, les sulfates d'alcalinoterreux, les fibres céramiques.

**Claims**

**1.** Process for the elimination of sulphur organic derivatives contained in an industrial gas, which also contains hydrogen sulphide ($H_2S$), sulphur dioxide ($SO_2$) and oxygen, of the type comprising the contact of said gas with water and a catalyst for transforming by a hydrolysis reaction said sulphur organic derivatives into easily eliminatable compounds, characterized in that use is made of a catalyst incorporating cerium dioxide, said catalyst not containing zirconium dioxide.

**2.** Process according to claim 1, characterized in that the catalyst consists of a mass product.

**3.** Process according to claim 2, characterized in that the catalyst also contains at least one oxide chosen from within the group containing titanium dioxide, alumina and oxides of rare earths.

**4.** Process according to claim 1, characterized in that the said catalyst consists of a support incorporating cerium dioxide and a supported phase.

8

**5.** Process according to claim 4, characterized in that said supported phase has at least one oxide chosen from within the group containing titanium dioxide, alumina and oxides of rare earths.

**6.** Process according to claim 1, characterized in that said catalyst consists of a support and a supported phase incorporating cerium dioxide.

**7.** Process according to claim 6, characterized in that the said catalyst is a monolithic support.

**8.** Process according to claim 7, characterized in that said catalyst is a monolithic support or a ceramic material.

**9.** Process according to claims 6 or 7, characterized in that said support is based on oxide chosen from within the group including titanium dioxide, alumina and oxides of rare earths.

**10.** Process according to one of the preceding claims, characterized in that the catalyst is in solid or hollow form with a multilobed profile.

**11.** Process according to one of the preceding claims, characterized in that the cerium dioxide quantity varies between 0.5 and 100% by weight, based on the finished catalyst.

**12.** Process according to one of the preceding claims, characterized in that said catalyst incorporates an additive constituted by at least one of the oxides of elements chosen from within the group constituted by silicon, thorium and rare earths.

**13.** Process according to claim 12, characterized in that the additive quantity varies between 1 and 20% by weight based on the total quantity of cerium dioxide and additive.

**14.** Process according to one of the preceding claims, characterized in that said catalyst has one or more complementary constituents chosen from within the group including clays, silicates, alkaline earth sulphates and ceramic fibres.

**Patentansprüche**

**1.** Verfahren zum Eliminieren von organischen Schwefelverbindungen, die in einem industriellen Gas enthalten sind, das unter anderem Schwefelwasserstoff ($H_2S$), Schwefligsäure-anhydrid ($SO_2$) und Sauerstoff enthält, umfassend das Zusammenbringen des Gases mit Wasser und einem Katalysator, um die in dem Gemisch enthaltenen organischen Schwefelverbindungen durch Hydrolyse leicht eliminierbar zu machen, dadurch gekennzeichnet, daß man einen Katalysator verwendet, enthaltend Ceroxid, wobei der Katalysator kein Zirkoniumoxid enthält.

**2.** Verfahren nach Anspruch 1, dadurch gekennzeichnet, daß der Katalysator aus einem festen Produkt besteht.

**3.** Verfahren nach Anspruch 2, dadurch gekennzeichnet, daß der Katalysator außerdem mindestens ein Oxid enthält, ausgewählt aus der Gruppe bestehend aus Titanoxid, Aluminiumoxid und den Oxiden der Seltenen Erden.

**4.** Verfahren nach Anspruch 1, dadurch gekennzeichnet, daß der Katalysator aus einem Träger besteht, der Ceroxid und eine auf dem Träger aufgebrachte Phase umfaßt.

**5.** Verfahren nach Anspruch 4, dadurch gekennzeichnet, daß die Phase auf dem Träger mindestens ein Oxid umfaßt, ausgewählt aus der Gruppe Titanoxid, Aluminiumoxid und Oxide der Seltenen Erden.

**6.** Verfahren nach Anspruch 1, dadurch gekennzeichnet, daß der Katalysator aus einem Träger und einer Phase auf dem Träger, umfassend Ceroxid, besteht.

**7.** Verfahren nach Anspruch 6, dadurch gekennzeichnet, daß der Katalysator ein monolithischer Träger ist.

**8.** Verfahren nach Anspruch 7, dadurch gekennzeichnet, daß der Katalysator ein monolithischer Träger oder ein kremaisches Material ist.

**9.** Verfahren nach den Ansprüchen 6 oder 7, dadurch gekennzeichnet, daß der Träger ein Oxid ist, ausgewählt aus der Gruppe umfassend Titanoxid, Aluminiumoxid und die Oxide der Seltenen Erden.

**10.** Verfahren nach einem der vorangehenden Ansprüche, dadurch gekennzeichnet, daß der Katalysator in massiver Form oder in Hohlform mit mehrlappigem Profil vorliegt.

**11.** Verfahren nach einem der vorangehenden Ansprüche, dadurch gekennzeichnet, daß die Menge an Ceroxid zwischen 0,5 und 100 Gew. -%, bezogen auf den fertigen Katalysator, liegt.

**12.** Verfahren nach einem der vorangehenden Ansprüche, dadurch gekennzeichnet, daß der Katalysator ein Additiv in Form mindestens eines Oxids der Elemente, ausgewählt aus der Gruppe bestehend aus Silicium, Thorium und den Seltenen Erden, enthält.

**13.** Verfahren nach Anspruch 12, dadurch gekennzeichnet, daß die Menge an Additiv zwischen 1 und 20 Gew. -%, bezogen auf die Gesamtmenge an Ceroxid und Additiv, liegt.

**14.** Verfahren nach einem der vorangehenden Ansprüche, dadurch gekennzeichnet, daß der Katalysator ein oder mehrere zusätzliche Bestandteile enthält, ausgewählt aus der Gruppe umfassend Tone, Silicate, Erdalkalisulfate und keramische Fasern.